# EUROPÄISCHE PATENTANMELDUNG

(11) **EP 3 363 273 A1**
(43) Veröffentlichungstag der Anmeldung: **22.08.2018**
(21) Anmeldenummer: 18401015.5
(22) Anmeldetag: 13.02.2018
(51) Int. Cl.: A01B 69/00, G05D 1/02

(54) **LANDWIRTSCHAFTLICHES MASCHINENSYSTEM UND VERFAHREN ZUR PLANUNG VON FAHRSPUREN ZUR BEARBEITUNG EINER LANDWIRTSCHAFTLICHEN FLÄCHE**

(30) Priorität: 16.02.2017 DE 102017103141
(71) Anmelder: Amazonen-Werke H. Dreyer GmbH & Co. KG, 49205 Hasbergen (DE)
(72) Erfinder: Albert, Jörn, 49080 Osnabrück (DE)

(57) **Zusammenfassung**

Landwirtschaftliche Maschinensystem (1,2) und Verfahren zur Bearbeitung einer landwirtschaftlichen Fläche (10, 20, 30) mit einem Positionserfassungssystem (7) und einem landwirtschaftlichen Datenverarbeitungssystem (3), wobei die Geometrie der zu bearbeitenden landwirtschaftlichen Fläche (10, 20, 30) in dem Datenverarbeitungssystem hinterlegt ist, wobei das Datenverarbeitungssystem zur Ermittlung von Fahrspuren (19.1, 19.2, 29, 37) auf einer landwirtschaftlichen Fläche (10, 20, 30) ausgebildet ist, wobei das Datenverarbeitungssystem über folgende Module zur Bestimmung eines Fahrspursystems zur Bearbeitung der landwirtschaftlichen Fläche (10, 20, 30) verfügt:
a) ein Aufteilungsmodul zur manuellen Teilung der landwirtschaftlichen Fläche in zumindest zwei Teilflächen (15, 16, 25, 26, 35, 36) durch einen Benutzer, falls eine separate Bearbeitung der Teilflächen sinnvoll erscheint, mittels einer Auswahl von Teilflächen und/oder einer Definition von Trennlinien (11, 21, 31) zur Aufteilung der landwirtschaftlichen Fläche in Teilflächen und
b) ein Fahrspurplanungsmodul zur Ermittlung von Fahrspuren (19.1, 19.2, 29, 37) für die landwirtschaftliche Fläche und/oder jede Teilfläche.

## Beschreibung

Die Erfindung betrifft ein landwirtschaftliches Maschinensystem gemäß dem Oberbegriff des Anspruchs 1 und ein Verfahren gemäß dem Oberbegriff des Anspruchs 6.

Die Bearbeitung einer landwirtschaftlichen Fläche mit einer landwirtschaftlichen Maschine wird im Allgemeinen reihenweise durchgeführt. Das bedeutet, dass mit einem landwirtschaftlichen Gerät, beispielsweise einem Pflug, das Feld entlang paralleler oder annähernd paralleler Linien, deren Abstand von der Arbeitsbreite des Gerätes abhängt, bearbeitet wird. Um diese Arbeit möglichst effizient durchführen zu können, werden die parallelen Fahrspuren zunehmend auf einem Terminal oder sonstigen Gerät dem Bediener angezeigt, so dass dieser das Gerät möglichst präzise entlang der vorgesehenen Spuren lenken kann. Auch eine automatische Lenkung entlang der parallelen Fahrspuren ist denkbar.

Die Lage, Ausrichtung und Geometrie der Fahrspuren hängt hierbei in erster Linie von der Arbeitsbreite der Maschine und der Feldgeometrie ab. Je nachdem, wie die betrachtete landwirtschaftliche Fläche geformt ist, kann es zweckmäßig sein, diese in Teilflächen zu unterteilen. Für diese Teilflächen wird dann zweckmäßigerweise, je nach Orientierung dieser Teilflächen auch die Bearbeitungsrichtung der jeweiligen Teilfläche individuell unterschiedlich sein, so dass Anschlussfahrten zwischen den Teilflächen oder Wendevorgänge optimiert werden.

Eine Unterteilung einer Fläche in mehrere Teilflächen ist beispielsweise aus der EP 2 446 725 B1 bekannt. Es wird vorgeschlagen, die Fläche an oder in der Nähe von konkaven Knoten zu unterteilen, indem nicht benachbarte konkave Knoten verbunden werden. Diese Vorgehensweise dient dem Zweck, für Bereiche des Feldes, welche aus einem Hauptbereich oder ersten Bereich des Feldes herausragen oder aus diesem herausstehen, eine separate Planung der Fahrspuren durchzuführen. Der Grund hierfür ist, dass für sehr unregelmäßig geformte landwirtschaftliche Flächen eine einzige Ausrichtung der Bearbeitungsrichtung ineffizient sein kann, weil beispielsweise eine unnötig hohe Anzahl von Wendemanövern durchgeführt werden muss.

Nachteilig an diesem Verfahren ist, dass allein die Winkelgröße an den Knoten, also den jeweiligen Eckpunkten, der landwirtschaftlichen Fläche betrachtet wird, um zu ermitteln, ob eine Teilfläche erzeugt wird oder nicht. Es sind ohne weiteres Feldgeometrien denkbar, bei denen diese Vorgehensweise nachteilbehaftet erscheint, beispielsweise, wenn durch die konkaven Knoten eben kein herausstehendes Teilflächenstück erzeugt wird oder ein herausstehendes Teilflächenstück nicht durch das Vorhandensein eines oder insbesondere mehrerer konkaver Knoten markiert wird.

Ein weiteres Verfahren eine landwirtschaftliche Fläche in Teilflächen zu unterteilen ist aus der DE 10 2014 108 075 A1 bekannt. Es wird in dieser Schrift ebenfalls vorgeschlagen konkave Winkel der Begrenzung der landwirtschaftlichen Fläche zu ermitteln und eine Teilungsstrecke zu erzeugen, welche die landwirtschaftliche Fläche in zumindest zwei Teilflächen unterteilt. Der Unterteilungsprozess findet hierbei anhand von Optimierungsprozessen statt. Es kann beispielsweise bei der Erzeugung der Teilungsstrecke eine zuvor festgelegte bevorzugte Ausrichtung berücksichtigt und diese Teilungsstrecke parallel zu dieser bevorzugten Ausrichtung festgelegt werden. Die bevorzugte Ausrichtung kann mit Hilfe von Optimierungsprozessen ermittelt werden, beispielsweise indem der Bearbeitungswand in nicht näher spezifizierter Weise minimiert wird oder auf historische Fahrspurdaten zurückgegriffen wird. Auch kann die Teilungsstrecke parallel zu einer Kante der landwirtschaftlichen Fläche ausgerichtet werden oder eine Maximalstrecke innerhalb der landwirtschaftlichen Fläche ermittelt und die Teilungsstrecke parallel zu dieser Maximalstrecke ausgerichtet werden.

Nachteilig an diesem Verfahren ist, dass nicht festgelegt ist, ob an allen konkaven Knoten oder falls nicht, an welchen konkaven Knoten eine Unterteilung der landwirtschaftlichen Fläche vorgenommen werden soll.

Aufgabe der vorliegenden Erfindung ist es, ein landwirtschaftliches Maschinensystem bereitzustellen, dass die Nachteile des Standes der Technik behebt.

Diese Aufgabe wird durch den kennzeichnenden Teil des Anspruchs 1 gelöst.

Es wird also ein Datenverarbeitungssystem bereitgestellt, welches über folgende Module zur Bestimmung eines Fahrspursystems zur Bearbeitung der landwirtschaftlichen Fläche verfügt:
a) ein Aufteilungsmodul zur manuellen Teilung der landwirtschaftlichen Fläche in zumindest zwei Teilflächen durch einen Benutzer, falls eine separate Bearbeitung der beiden Teilflächen sinnvoll erscheint, mittels einer Auswahl von Teilflächen und/oder einer Definition von Trennlinien zur Aufteilung der landwirtschaftlichen Fläche in Teilflächen und
b) ein Fahrspurplanungsmodul zur Ermittlung von Fahrspuren für die landwirtschaftliche Fläche und/oder jede Teilfläche.

Auf diese Weise kann der Benutzer in vorteilhafter Weise Teilflächen der landwirtschaftlichen Fläche markieren, welche für die Planung von Fahrspuren separat betrachtet werden sollen. Erst anschließend werden die Fahrspuren für jede Teilfläche separat berechnet. Dieser Vorgehensweise liegt die Erkenntnis zugrunde, dass ein vorteilhaftes Aufteilen einer landwirtschaftlichen Fläche für die Planung von Fahrspuren oftmals nicht vollständig automatisiert werden kann, da verschiedenste Geometrien von Flächen denkbar sind, die eine Aufteilung sinnvoll erscheinen lassen, bei denen jedoch eine automatische Klassifizierung mittels einheitlicher Kriterien nicht möglich ist. Zudem entscheidet oftmals eine subjektive Einschätzung des jeweiligen Benutzers, ob eine Fläche in mehrere Teilflächen unterteilt und separat bearbeitet werden soll oder nicht. Es ist schwierig die jeweiligen Vorlieben des Benutzers in ausreichender Weise zu antizipieren bzw. vorab eindeutige Kriterien abzufragen, die dieses ermöglichen.

Die Module können auf einem Terminal installiert oder beispielsweise das Aufteilen der Fläche in Teilflächen vorab mittels eines separaten Datenverarbeitungssystems durch den Benutzer vorgenommen worden sein. Auch ist es denkbar, dass eine entsprechende Aufteilung bereits in dem Terminal oder an einem anderen Ort gespeichert und lediglich neu aufgerufen oder an dieses übertragen wird. So kann beispielsweise für eine jeweilige landwirtschaftliche Fläche eine einmal vorgenommene Aufteilung immer wieder aufgerufen und verwendet werden, um für die jeweilige landwirtschaftliche Maschine für jede Teilfläche die Fahrspuren zu ermitteln, beispielsweise in Abhängigkeit von Maschinenparametern, wie minimale und/oder maximale Arbeitsbreite und/oder minimaler Bearbeitungsradius usw.

In einer bevorzugten Ausgestaltung der Erfindung umfasst das Fahrspurplanungsmodul:
c) ein Richtungsmodul zur Ermittlung einer Bezugsachse als bevorzugte Bearbeitungsrichtung der landwirtschaftlichen Fläche oder jeweiligen Teilfläche in Abhängigkeit der Geometrie der landwirtschaftlichen Fläche oder Teilfläche,
d) ein Klassifizierungsmodul zur Klassifizierung von Abschnitten der Begrenzung der landwirtschaftlichen Fläche oder einer Teilfläche in Abschnitte eines Vorgewendes oder Seitenabschnitte in Abhängigkeit von der Ausrichtung der Bezugsachse und/oder der Geometrie der landwirtschaftlichen Fläche oder Teilfläche,
e) ein Separierungsmodul zur automatischen Aufteilung der landwirtschaftlichen Fläche oder Teilfläche in Unterteilungsflächen anhand der klassifizierten Abschnitte, wobei die Aufteilung der landwirtschaftlichen Fläche oder Teilfläche in Unterteilungsflächen anhand folgender Kriterien erfolgt:
   - Orientierung und/oder Länge benachbarter Abschnitte, insbesondere benachbarter Vorgewende- und Seitenabschnitte und/oder,
   - Position von Hindernissen innerhalb der Fläche oder Teilfläche,
f) ein Vorgewendemodul zum Anlegen zumindest eines Vorgewendebereiches pro Teilfläche und/oder Unterteilungsfläche oder zweier Vorgewendebereiche pro landwirtschaftliche Fläche in Abhängigkeit der klassifizierten Abschnitte der Begrenzung der landwirtschaftlichen Fläche und/oder der ermittelten Bezugsachse für die landwirtschaftliche Fläche oder Teilfläche und
g) ein Fahrspurermittlungsmodul zur Planung eines Fahrspursystems für die landwirtschaftliche Fläche und/oder zumindest eine Teilfläche und/oder Unterteilungsfläche anhand der ermittelten Bezugsachse, wobei die Fahrspuren zumindest annähernd parallel zu der jeweiligen Bezugsachse der Fläche oder Teilfläche verlaufen.
Es wird also zunächst eine Bezugsachse pro Teilfläche ermittelt. Diese gibt die bevorzugte Bearbeitungsrichtung in der jeweiligen Teilfläche an. Die Bezugsachse wird bevorzugt automatisch anhand der Geometrie der jeweiligen Fläche oder Teilfläche ermittelt, kann jedoch auch manuell festgelegt werden. Es werden zudem Abschnitte der Begrenzung der landwirtschaftlichen Fläche oder Teilfläche klassifiziert in Seitenabschnitte oder Abschnitte eines Vorgewendes, wobei diese Klassifizierung in Abhängigkeit von der Ausrichtung der Bezugsachse und/oder der Geometrie der landwirtschaftlichen Fläche oder Teilfläche und bevorzugt automatisiert vorgenommen wird. Eine Klassifizierung in Abhängigkeit von Benutzereingaben oder eine teilautonome Klassifizierung ist jedoch ebenso denkbar. Es ist außerdem ein Separierungsmodul zur automatischen Aufteilung der landwirtschaftlichen Fläche oder Teilfläche in Unterteilungsflächen anhand der klassifizierten Abschnitte vorgesehen, wobei die Aufteilung der landwirtschaftlichen Fläche oder Teilfläche in Unterteilungsflächen anhand folgender Kriterien erfolgt:
- Orientierung und/oder Länge benachbarter Abschnitte, insbesondere benachbarter Vorgewende- und Seitenabschnitte und/oder,
- Position von Hindernissen innerhalb der Fläche oder Teilfläche.
Es findet also automatisiert eine Unterteilung der landwirtschaftlichen Fläche oder Teilfläche in Unterteilungsflächen statt, je nachdem, wie die relative Orientierung benachbarter Abschnitte der Begrenzung der landwirtschaftlichen Fläche ist bzw. ob Hindernisse innerhalb der landwirtschaftlichen Fläche vorhanden sind und wie diese orientiert sind. Es ist überdies vorgesehen ein oder mehrere Vorgewendebereiche innerhalb einer landwirtschaftlichen Fläche oder Teilfläche anzulegen, wobei zumindest ein Vorgewendebereich pro Teilfläche und/oder Unterteilungsfläche oder zumindest zwei Vorgewendebereiche pro landwirtschaftlicher Fläche vorgesehen sind, um mit der landwirtschaftlichen Maschine in den jeweiligen Endbereichen der landwirtschaftlichen Fläche wenden zu können. Zudem wird mittels eines Fahrspurermittlungsmodules ein Fahrspursystem für die landwirtschaftliche Fläche und/oder zumindest eine Teilfläche und/oder Unterteilungsfläche anhand der ermittelten Bezugsachse oder Bezugsachsen geplant, wobei die Fahrspuren zumindest annähernd parallel zu der jeweiligen Bezugsachse der Fläche oder Teilfläche verlaufen. Die Fahrspuren verlaufen hierbei bevorzugt zumindest annähernd parallel zu der jeweiligen Bezugsachse der Teilfläche und werden in Abhängigkeit von Parametern der landwirtschaftlichen Maschine, wie maximaler und/oder minimaler Arbeitsbreite und/oder minimaler Bearbeitungsradius vorzugsweise automatisch ermittelt. Hierbei kann es je nach Geometrie der landwirtschaftlichen Fläche und/oder Teilfläche und/oder Unterteilungsfläche notwendig sein, dass die Fahrspuren nur in Teilbereichen parallel zu der Bezugsachse verlaufen, wenn beispielsweise die landwirtschaftliche Fläche und/oder Teilfläche und/oder Unterteilungsfläche trapezartig oder auf andere Weise unregelmäßig geformt ist.

Die vorab beschriebenen Module des Fahrspurplanungsmodules können jeweils in beliebiger Kombination autonom oder teilautonom, also durch Benutzereingaben unterstützt oder vollständig manuell ablaufen. Lediglich der Schritt des Separierens der jeweiligen Teilfläche in Unterteilungsflächen findet in jedem Fall zumindest teilautonom, bevorzugt vollautomatisch, statt. Ebenfalls bevorzugt laufen die Schritte c) - g) in der angegebenen alphabetischen Reihenfolge ab. Das hier beschriebene Verfahren zeigt auf, wie die Planung von Fahrspuren einer landwirtschaftlichen Fläche besonders vorteilhaft ablaufen kann. So wird zunächst durch den Benutzer manuell eine Einteilung der landwirtschaftlichen Fläche in Teilflächen vorgenommen, sofern dem jeweiligen Benutzer dies sinnvoll erscheint. Das bevorzugte Kriterium hierbei ist, ob verschiedene Teilflächen mit verschieden ausgerichteten Bezugsachsen eine effizientere Bearbeitung der landwirtschaftlichen Fläche ermöglichen, als eine komplette Bearbeitung der landwirtschaftlichen Fläche entlang einer Bezugsachse. So kann es beispielsweise bei einer L-förmigen Fläche je nach Länge der Schenkel der Fläche sinnvoll sein, diese separat entlang zweier unterschiedlich, bevorzugt entlang der Schenkel orientierter Bezugsachsen zu bearbeiten.

Es sind auch andere Reihenfolgen der Schritte c)- g) denkbar. So kann beispielsweise das Klassifizierungsmodul vor dem Richtungsmodul ausgeführt werden und das Klassifizierungsmodul die Klassifizierung Abschnitte als Seitenabschnitt oder Vorgewendeabschnitt anhand der jeweiligen Geometrie der betrachteten Fläche oder Teilfläche ermitteln.

In einer bevorzugten Weiterbildung der Erfindung umfasst das Fahrspurermittlungsmodul ferner ein
h) Approximierungsmodul zur Annäherung der Begrenzung der landwirtschaftlichen Fläche und/oder Teilfläche und/oder Unterteilungsfläche mittels eines geschlossenen Polygonzuges.
Hierdurch kann insbesondere vor der eigentlichen Planung, also bevor mittels des Richtungsmodules die Richtung der Bezugsachsen festgelegt wird, die landwirtschaftliche Fläche durch einen Polygonzug approximiert werden, so dass die Fläche durch eine Kette von Streckenelementen begrenzt und somit die Geometrie der landwirtschaftlichen Fläche besonders einfach verarbeitet werden kann.

In einer möglichen Weiterbildung der Erfindung umfasst das Fahrspurermittlungsmodul zudem ein
i) Bogenschlussmodul zur Verbindung von Fahrspuren aneinander angrenzender Teilflächen und/oder Unterteilungsflächen mittels eines Bogenschlusses, wobei zu verbindende Fahrspuren sich an der Grenze benachbarter Teilflächen und/oder Unterteilungsflächen zumindest annähernd berühren oder schneiden, wobei der für den Bogenschluss zu konstruierende Kreisbogen bevorzugt jeweils tangential an die zu verbindenden Fahrspuren anschließt, wobei bevorzugt die Position der Kreisbögen ermittelt und erst anschließend die Fahrspuren derart konstruiert werden, dass sie tangential an den Kreisbogen anschließen.

Es werden also bevorzugt vor der eigentlichen Fahrspurermittlung Kreisbögen im Übergangsbereich zweier Teilflächen und/oder Unterteilungsflächen geplant, welche eine Verbindung der Fahrspuren der benachbarten Teilflächen und/oder Unterteilungsflächen ermöglichen sollen, so dass entlang einer ersten Fahrspur die Bearbeitung einer ersten Teilfläche oder Unterteilungsfläche erfolgt, anschließend entlang des Kreisbogens, der tangential an die erste Fahrspur anschließt, der Übergangsbereich bearbeitet wird und dann entlang einer zweiten Fahrspur die landwirtschaftliche Fläche oder Teilfläche bearbeitet wird, wobei die zweite Fahrspur auf der Seite des Kreisbogen anschließt, an der die erste Fahrspur nicht anschließt. Auf diese Weise kann ein Übergangsbereich zwischen zwei Teilflächen und/oder Unterteilungsflächen vorteilhaft bearbeitet werden deren Fahrspuren nicht parallel zueinander orientiert sind. Die Teilflächen grenzen hierbei nicht an zwei Seitenabschnitten aneinander an. Bei der Ermittlung der Kreisbögen werden vorzugsweise Parameter der landwirtschaftlichen Maschine berücksichtigt, wie vorzugsweise minimale und/oder maximale Arbeitsbreite und/oder minimaler Bearbeitungsradius, welche den minimal zu befahrenden Radius während der Bearbeitung mit der landwirtschaftlichen Maschine angibt.

Die Module b) - i) sind bevorzugt geeignet die jeweilige Aufgabe zumindest teilautonom zu bearbeiten. Es werden also bevorzugt jeweils Berechnungsschritte durch das Terminal und/oder ein entsprechend verbundenes Datenverarbeitungssystem durchgeführt, um im Ergebnis eine optimierte Fahrspurplanung bereitzustellen. Teilautonom meint hierbei, dass der jeweilige Benutzer eine automatisch ermittelte Angabe, beispielsweise einen Vorschlag für die Wahl einer Bezugsachse oder eines Vorgewendebereiches bestätigt oder verwirft und in letzterem Fall eine erneute Berechnung mit alternativen Parametern bewirkt. Alternativ kann vorgesehen sein, dass der Benutzer eine bevorzugte aus mehreren aus Sicht des Systems zumindest annähernd gleichwertigen Möglichkeiten auswählt, beispielsweise bei der Wahl eines Fahrspursystems, einer Bezugsachse oder eines Vorgewendebereichs. Es ist auch denkbar, dass der Benutzer um die Eingabe bestimmter Parameter gebeten wird, falls die Berechnung einzelner Module kein Ergebnis liefert. Beispielsweise wenn keine Bezugsachsenorientierung ermittelt werden konnte, kann der Benutzer um die manuelle Wahl einer Bezugsachse gebeten werden.

In einer bevorzugten Ausgestaltung verfügt das Maschinensystem über eine mittels zumindest eines Aktors anpassbare Arbeitsbreite und umfasst zudem
j) ein Arbeitsbreitenmodul, welches zur automatischen Anpassung der Arbeitsbreite an den Abstand zu einer benachbarten Fahrspur Stellsignale an den zumindest einen Aktor sendet, so dass keine unbearbeiteten Flächen übrig bleiben und möglichst keine Doppelbearbeitung oder Fehlbearbeitung erfolgt.

Auf diese Weise kann vorteilhaft entlang der bearbeiteten Fahrspuren automatisiert eine Anpassung der Arbeitsbreite in der Form erfolgen, dass die Arbeitsbreite immer auf den jeweiligen Abstand der Fahrspuren des Fahrspursystems am jeweiligen Ort der landwirtschaftlichen Maschine angepasst ist. Insbesondere kann bei einer Sämaschine die Dosierung an den entsprechenden Positionen ein- und/oder ausgeschaltet werden, um Doppelbearbeitungen und/oder Fehlstellen zu vermeiden. Zudem kann bei einer beliebigen Verteilmaschine wie Feldspritze oder Düngerstreuer die Verteilung mittels der Ansteuerung zumindest eines Aktors in der Weise angepasst werden, dass Doppelbearbeitungen bzw. Fehlapplikationen und/oder Fehlstellen vermieden werden. Hierfür können bei einer Feldspritze beispielsweise ein oder mehrere Düsen oder Teilbreiten zu- oder abgeschaltet werden und bei einem Düngerstreuer die Verteilung mittels Änderung der Drehzahl, Dosiermenge, Aufgabepunkt und/oder Einsatz einer Grenzstreuvorrichtung angepasst werden. Bei einem Pflug kann beispielsweise vorgesehen sein die Arbeitsbreite mittels eines entsprechenden Aktors, insbesondere Hydraulikzylinders, anzupassen.

Die vorliegende Anmeldung stellt zudem ein entsprechendes Verfahren zur Planung von Fahrspuren auf einer landwirtschaftlichen Fläche oder Teilfläche zur Bearbeitung der landwirtschaftlichen Fläche mittels einer landwirtschaftlichen Maschine entlang der geplanten Fahrspuren bereit, wobei das Verfahren gekennzeichnet ist durch folgende Schritte:
k) Manuelles Aufteilen der landwirtschaftlichen Fläche in Teilflächen durch einen Benutzer, falls eine sukzessive Bearbeitung von Teilflächen der landwirtschaftlichen Fläche vorteilhaft erscheint,
I) Ermitteln einer Bezugsachse als bevorzugte Bearbeitungsrichtung der landwirtschaftlichen Fläche oder jeweiligen Teilfläche in Abhängigkeit der Geometrie der landwirtschaftlichen Fläche oder Teilfläche,
m) Klassifizieren von Abschnitten der Begrenzung der landwirtschaftlichen Fläche oder einer Teilfläche in Abschnitte eines Vorgewendes oder Seitenabschnitte in Abhängigkeit von der Ausrichtung der Bezugsachse und/oder der Geometrie der landwirtschaftlichen Fläche oder Teilfläche,
n) Automatisches Aufteilen der landwirtschaftlichen Fläche oder Teilfläche in Unterteilungsflächen anhand der klassifizierten Abschnitte, wobei die Aufteilung der landwirtschaftlichen Fläche oder Teilfläche in Unterteilungsflächen anhand folgender Kriterien erfolgt:
   - Orientierung und/oder Länge benachbarter Abschnitte, insbesondere benachbarter Vorgewende- und Seitenabschnitte und/oder
   - Position von Hindernissen innerhalb der Fläche oder Teilfläche,
o) Anlegen zumindest eines Vorgewendebereiches pro Teilfläche und/oder Unterteilungsfläche oder zweier Vorgewendebereiche pro landwirtschaftlicher Fläche in Abhängigkeit der klassifizierten Abschnitte der Begrenzung der landwirtschaftlichen Fläche und/oder der ermittelten Bezugsachse für die landwirtschaftliche Fläche oder Teilfläche und
p) Planen eines Fahrspursystems für die landwirtschaftliche Fläche und/oder zumindest eine Teilfläche und/oder Unterteilungsfläche anhand der ermittelten Bezugsachse, wobei die Fahrspuren zumindest annähernd parallel zu der jeweiligen Bezugsachse der Fläche oder Teilfläche verlaufen.

Es ist also ein Verfahren vorgesehen, das zunächst eine manuelle Aufteilung der landwirtschaftlichen Fläche in Teilflächen je nach individueller Auffassung des Benutzers ermöglicht, wobei im Anschluss daran für die landwirtschaftliche Fläche oder Teilfläche jeweils eine Bezugsachse festgelegt wird, die die bevorzugte Bearbeitungsrichtung innerhalb der jeweiligen Teilfläche angibt. Sodann werden Abschnitte der Begrenzung der landwirtschaftlichen Fläche als Abschnitte des Vorgewendes oder Seitenabschnitte klassifiziert und zwar in Abhängigkeit der Orientierung der Bezugsachse oder der Geometrie der Fläche oder Teilfläche. Die Bezugsachse steht hierbei jeweils bevorzugt zumindest annähernd senkrecht auf den Vorgewendeabschnitten und ist eher parallel ausgerichtet zu den Seitenabschnitten. Es werden automatisch Unterteilungsflächen angelegt, wobei diese explizit anhand der Orientierung benachbarter Abschnitte insbesondere Vorgewende- und Seitenabschnitte und/oder anhand der Position von Hindernissen innerhalb der Fläche oder Teilfläche angelegt werden. Es ist auch denkbar, dass es nicht notwendig ist eine oder mehrere Unterteilungsflächen anzulegen. Hierbei sind Hindernisse beispielsweise Wasserflächen, Strommasten, Bäume und ähnliches innerhalb der landwirtschaftlichen Fläche. Es werden vorzugsweise daran anschließend Vorgewendebereiche angelegt. Hierbei ist vorgesehen, dass zumindest zwei Vorgewendebereiche innerhalb einer landwirtschaftlichen Fläche bzw. zumindest ein Vorgewendebereich innerhalb einer Teilfläche oder Unterteilungsfläche angelegt wird. Vorzugsweise abschließend wird das Fahrspursystem geplant insbesondere separat für jede Teilfläche und/oder Unterteilungsfläche entsprechend der gewählten Bezugsachsen und/oder Seitenabschnitte und/oder Vorgewendebereiche. Hierbei gilt, dass die Fahrspuren bevorzugt parallel zu der jeweiligen Bezugsachse der Teilfläche oder Unterteilungsfläche verlaufen und in den Randbereichen zumindest annähernd parallel zu den Seitenabschnitten verlaufen. Es wird ein Fahrspursystem erstell in dem die relative Orientierung benachbarter Fahrspuren angepasst sein kann, um die obigen Kriterien zu erfüllen, beispielsweise wenn die jeweilige Fläche, Teilfläche oder Unterteilungsfläche trapezartig oder sonst wie unregelmäßig geformt ist. Die Fahrspuren verlaufen bevorzugt senkrecht zu zumindest einem Vorgewendebereich.

Bevorzugt beinhaltet eine Weiterbildung des Verfahrens zusätzlich den Schritt des Annäherns der Begrenzung der landwirtschaftlichen Fläche mittels eines geschlossenen Polygonzuges. Es wird also insbesondere automatisch die Begrenzung der landwirtschaftlichen Fläche und/oder Teilfläche und/oder Unterteilungsfläche mittels eines geschlossenen Polygonzuges approximiert, um im weiteren Verlauf die Bezugsachsen bestmöglich ermitteln, die einzelnen Abschnitte des Polygonzuges optimal klassifizieren, das Aufteilung der Fläche oder der Teilflächen in Unterteilungsflächen vornehmen, die Vorgewendebereiche bestimmen und die Fahrspuren optimal festlegen zu können. Hierbei ist jede beliebige Kontur einer Fläche durch einen geschlossenen Polygonzug annäherbar.

Eine mögliche Ausgestaltung des Verfahrens umfasst zudem den Schritt
r) Verbinden von Fahrspuren aneinander angrenzender Teilflächen und/oder Unterteilungsflächen mittels eines Bogenschlusses, wobei zu verbindende Fahrspuren sich an der Grenze benachbarter Teilflächen und/oder Unterteilungsflächen zumindest annähernd berühren oder schneiden, wobei der für den Bogenschluss zu konstruierende Kreisbogen bevorzugt jeweils tangential an die zu verbindenden Fahrspuren anschließt, wobei bevorzugt die Position der Kreisbögen ermittelt und erst anschließend die Fahrspuren derart konstruiert werden, dass sie tangential an den Kreisbogen anschließen.
Auf diese Weise können in vorteilhafter Weise Fahrspuren benachbarter Teilflächen und/oder Unterteilungsflächen verbunden werden. Hierfür werden vorzugsweise zunächst die Positionen der Kreisbögen festgelegt und erst anschließend die Fahrspuren in den entsprechenden Teilflächen und/oder Unterteilungsflächen konstruiert und im Übergangsbereich, also an den Kreisbögen mit diesen jeweils tangential verbunden. Auf diese Weise kann ein Fahrspursystem ermittelt werden, welches Fahrspuren mehrerer Teilflächen und/oder Unterteilungsflächen derart verbindet, dass nicht zwischen den Teilflächen und/oder Unterteilungsflächen gewendet werden muss, sondern diese in einem Zug bearbeitet werden können.

Weitere vorteilhafte Ausgestaltungen ergeben sich aus den Figuren und der zugehörigen Beschreibung. Hierbei zeigen
- Fig. 1: Landwirtschaftliches Maschinensystem,
- Fig. 2 - 4: Planung eines erfindungsgemäßen Fahrspursystems für eine erste landwirtschaftliche Fläche,
- Fig. 5 - 7: Planung eines erfindungsgemäßen Fahrspursystems für eine zweite landwirtschaftliche Fläche und
- Fig. 8 - 10: Planung eines erfindungsgemäßen Fahrspursystems für eine dritte landwirtschaftliche Fläche.

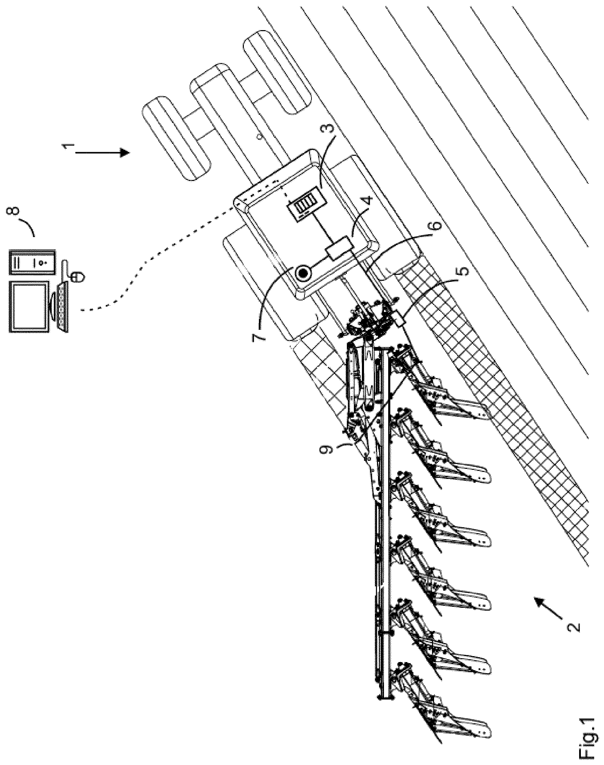

Ein erfindungsgemäßes landwirtschaftliches Maschinensystem ist in Fig. 1 gezeigt. Das landwirtschaftliche Maschinensystem besteht hier aus einem Traktor 1 und einem an den Traktor angekoppelten Pflug 2. Der angekoppelte Pflug ist hier beispielhaft zu sehen. Es kann auch jede beliebige andere landwirtschaftliche Maschine zur Bearbeitung einer landwirtschaftlichen Fläche an den Traktor 1 angehängt werden. Auch kann das landwirtschaftliche Maschinensystem als selbstfahrendes landwirtschaftliches Maschinensystem, beispielsweise selbstfahrende Spritze oder Mähdrescher, ausgestaltet sein.

Der Traktor 1 verfügt über ein Terminal 3, welches mittels einer Anzeigevorrichtung Informationen dem Fahrer des Traktors 1 zur Anzeige bringen kann, insbesondere können Informationen der landwirtschaftlichen Maschine 2 und des Traktors, wie beispielsweise Position, Geschwindigkeit usw., angezeigt und Betriebsparameter, beispielsweise die Arbeitsbreite und/oder Arbeitstiefe, geändert werden. Das Terminal 3 verfügt hierfür über Bedienelemente in Form von Schaltern, Knöpfen und/oder insbesondere einen berührungsempfindlichen Bildschirm. Das Terminal ist insbesondere mit einem oder mehreren Jobrechnern 4,5 verbunden, welche sich auf dem Traktor und/oder der angekoppelten landwirtschaftlichen Maschine befinden können. Die Datenverbindung zwischen dem Jobrechner 5 der landwirtschaftlichen Maschine 2 und dem Jobrechner 4 des Traktors erfolgt bevorzugt über eine genormte Datenverbindung 6, insbesondere eine sogenannte ISOBus-Schnittstelle. Alternativ kann auch das Terminal 3 direkt über das Bussystem, insbesondere den ISOBus mit dem Jobrechner 5 der landwirtschaftlichen Maschine 2 verbunden sein. Über dieses Bussystem werden Informationen der landwirtschaftlichen Maschine, beispielsweise eingestellte IstWerte oder Sensordaten an den Jobrechner 4 oder das Terminal 3 übertragen. In entgegengesetzter Richtung werden auch Steuerbefehle des Jobrechners 4 oder Terminals 3 an den Jobrechner 5 der landwirtschaftlichen Maschine 2 übertragen. Zur Ausführung der Steuerbefehle ist der Jobrechner 5 mit Aktuatoren und Sensoren über eine Datenverbindung verbunden, beispielsweise mit einem Aktor 9 zur Einstellung der Schnittbreite des Pfluges 2. Denkbar ist auch, dass der Jobrechner 5 der landwirtschaftlichen Maschine 2 im Rahmen einer sogenannten TIM-Anwendung (Tractor-Implement-Management) über das Bussystem 6 Steuerbefehle an den Traktor 1 übermittelt. Hierüber kann durch die angekoppelte Maschine 2 beispielsweise ein Steuerbefehl zur Reduktion der Geschwindigkeit oder zur Anhebung eines Dreipunktkrafthebers zur Reduktion der Arbeitstiefe erfolgen. Eine solche Maßnahme kann beispielsweise durch entsprechende Sensorsignale an der landwirtschaftlichen Maschine 2 getriggert sein.

Das Terminal 3 ist nun dazu ausgebildet Fahrspuren der zu bearbeitenden landwirtschaftlichen Fläche zu ermitteln. Hierfür verfügt das Terminal über verschiedene Module zur Planung eines gewünschten Fahrspursystems. Die Koordinaten der landwirtschaftlichen Fläche sind in einem Speicher des Terminals 3 hinterlegt. Es kann auch vorgesehen sein, vor der Planung der Fahrspuren die Außenkontur der landwirtschaftlichen Fläche abzufahren und mittels des Terminals 3 aufzuzeichnen. Hierfür und auch zur späteren Positionsdetektion des landwirtschaftlichen Maschinensystems während der Bearbeitung der landwirtschaftlichen Fläche ist ein Positionsempfänger 7 vorgesehen, welcher über den Jobrechner 4 mit dem Terminal 3 verbunden ist. Der Positionsempfänger 7, kann auch direkt mit dem Terminal 3 verbunden sein. Der Positionsempfänger 7 kann beispielsweise als GPS-Antenne ausgebildet sein.

Die Module zur Berechnung des Fahrspursystems werden entweder auf dem Terminal 3 oder dem mit dem Terminal verbundenen Jobrechner 4 ausgeführt und das Fahrspursystem dann auf dem Terminal lediglich angezeigt. Auch ist es denkbar, dass das Fahrspursystem auf einem externen Datenverarbeitungssystem 8 ermittelt wird und die Fahrspurdaten und Feldkoordinaten mittels einer Datenverbindung oder einem Datenträger auf das Terminal 3 oder den Jobrechner 4 übertragen werden.

Die Module zur Planung des Fahrspursystems werden nun auf dem Terminal 3 oder dem Jobrechner 4 ausgeführt oder auf dem Datenverarbeitungssystem 8 ausgeführt und das Fahrspursystem dem Jobrechner 4 oder Terminal 3 zur Verfügung gestellt. Die landwirtschaftliche Fläche wird nun entlang des angelegten Fahrspursystems bearbeitet. Hierfür ist vorgesehen, dass das Fahrspursystem auf einem Bildschirm des Terminals angezeigt wird. Der Benutzer kann nun den Traktor 1 entlang der angezeigten Fahrspuren steuern und das Feld entsprechend bearbeiten. Hierfür wird auch die Schnittbreite des Pfluges bzw. Arbeitsbreite der landwirtschaftlichen Maschine entsprechend der Abstände der Fahrspuren des Fahrspursystems an der aktuellen Position angepasst.

In einer vorteilhaften Weiterbildung der Erfindung ist vorgesehen, dass das Maschinensystem die Arbeitsbreite der landwirtschaftlichen Maschine entsprechend des Fahrspurabstandes an der aktuellen Position des Maschinensystems automatisch ermittelt und einstellt. Hierfür werden entsprechende Steuerbefehle von dem Terminal 3 oder dem Jobrechner 4 an den Jobrechner 5 der landwirtschaftlichen Maschine 2 übermittelt, woraufhin der Jobrechner 5 im vorliegenden Beispiel die Arbeitsbreite des Pfluges 2 mittels des Aktors 9 erforderlichenfalls einstellt. Die automatische Einstellung der Arbeitsbreite lässt sich für beliebige landwirtschaftliche Maschinen realisieren, welche über eine Datenverbindung von dem Traktor 2 steuerbar sind, insbesondere lässt sich die Arbeitsbreite von Sämaschine, Feldspritzen oder Düngerstreuern auf diese Weise an die örtlichen Gegebenheiten anpassen.

In einer vorteilhaften Weiterbildung ist ebenfalls denkbar, dass das landwirtschaftliche Maschinensystem teil- oder vollautonom die landwirtschaftliche Fläche entlang des geplanten Fahrspursystems bearbeitet. Hierfür werden durch das Terminal 3 oder den Jobrechner 4 zusätzlich zu den Steuerbefehlen an den Jobrechner 5 der landwirtschaftlichen Maschine Lenkbefehle und/oder Steuerbefehle zur Anpassung der Geschwindigkeit ausgegeben, so dass der Traktor 1 entlang des Fahrspursystems die landwirtschaftliche Fläche bearbeitet. Auch die Wendevorgänge am Ende bzw. zu Beginn einer jeweiligen Fahrspur lassen sich auf diese Weise automatisieren.

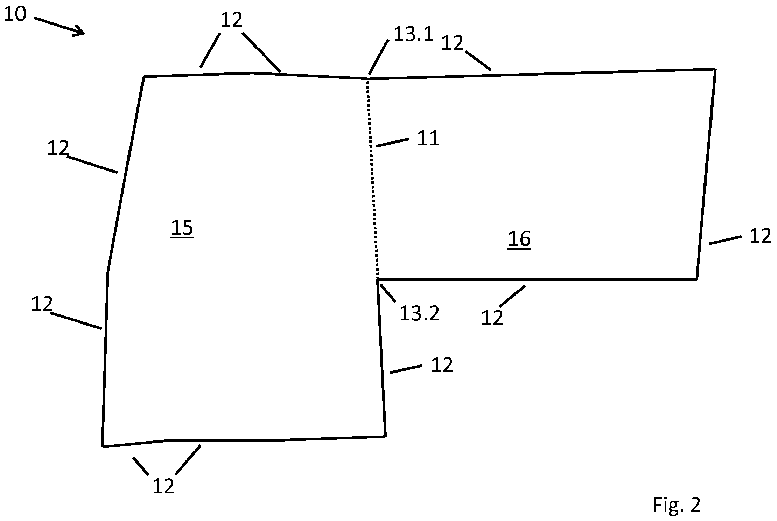

Fig. 2 zeigt eine schematische Darstellung einer landwirtschaftlichen Fläche 10. Die Geometrie dieser Fläche kann in einem Speicher eines Datenverarbeitungssystems, insbesondere des Terminals 3, des Jobrechners 4 oder des Computers 8, als Kartendaten hinterlegt sein. Es kann beispielsweise die Geometrie der Fläche durch das Abfahren und Aufzeichnen der Kontur mittels eines mit einem GPS-Empfänger ausgestatteten landwirtschaftlichen Gerätes oder Zugfahrzeuges erfasst und gespeichert werden. Das landwirtschaftliche Zugfahrzeug 1 verfügt über ein Terminal 3 oder dergleichen, welches zur Anzeige von Informationen und Eingabe von Parametern ausgebildet ist. Auf diesem Terminal 3 können beispielsweise Betriebs- und Statusdaten der landwirtschaftlichen Maschine einem Nutzer angezeigt werden und es können Bearbeitungsparameter eingegeben und geändert werden. Das Terminal ist ebenfalls dazu ausgebildet Sollfahrspuren anzuzeigen entlang welcher die landwirtschaftliche Fläche 10 bearbeitet werden soll. Alternativ oder zusätzlich kann das Fahrzeug 1 autonom oder teilautonom entlang der Sollfahrspur gelenkt werden. Dies kann durch das Terminal 3 oder einen vorzugsweise mit dem Terminal verbundenen Jobrechner 4 erfolgen, welcher sich auf dem Zugfahrzeug 1 oder einem an das Zugfahrzeug angehängten Gerät befindet. Gleichzeitig können auf dem Terminal die momentane Position und/oder die tatsächlich befahrenen oder die tatsächlich bearbeitete Fläche angezeigt werden.

Die Planung der Fahrspuren kann vorab auf einem externen Datenverarbeitungssystem 8 erfolgen und vor der Feldarbeit oder währenddessen auf das Terminal 3 oder einen mit dem Terminal verbundenen Jobrechner 4 übertragen werden. Die Planung kann auch direkt auf dem Terminal 3 vorgenommen werden.

Für die Planung der Feldarbeit ist es vorteilhaft, dem Benutzer die Möglichkeit zu geben, das Feld nach eigenem Ermessen in eine oder mehrere Teilflächen zu unterteilen. Der Grund hierfür ist, dass eine getrennte Bearbeitung verschiedener Feldbereiche, insbesondere wenn diese eine Längenausdehnung in unterschiedliche Richtungen aufweisen, effizienter sein kann. Die Ausrichtung der Fahrspuren soll vorzugsweise so gewählt werden, dass die Fahrspurlänge maximiert und/oder die Anzahl der Wendevorgänge minimiert wird. Eine Aufteilung der landwirtschaftlichen Fläche, die diese Kriterien erfüllt lässt sich oftmals sehr intuitiv durch einen Benutzer durchführen, während eine Automatisierung dieses Vorganges nicht für alle denkbaren Feldgeometrien möglich ist. Außerdem können weitere Kriterien für den Benutzer relevant sein, die unter Umständen nicht in das Terminal eingegeben werden können. Beispielsweise kann es relevant für die Aufteilung des Feldes sein, an welcher Stelle der Benutzer vor dem Beginn der Arbeit auf das Feld fährt und an welcher Stelle er es verlassen möchte. Außerdem kann es für die Aufteilung des Feldes eine Rolle spielen, wie in der Vergangenheit das Feld bearbeitet wurde, beispielsweise mit welcher Art von landwirtschaftlicher Maschine oder in welcher Richtung die Fahrspuren bei vergangenen Arbeitsprozessen, beispielsweise beim Pflügen oder Säen, orientiert war. Diese Informationen liegen der Datenverarbeitungseinrichtung bzw. dem Terminal, welches zur Planung des Fahrspursystems vorgesehen ist unter Umständen nicht vor.

Eine landwirtschaftliche Fläche 10, welche vorteilhaft beispielsweise in zwei Teilflächen 15, 16 aufgeteilt werden kann ist schematisch in Fig. 2 dargestellt. Die Fläche 10 wird durch Begrenzungsabschnitte 12 begrenzt. Diese Begrenzungsabschnitte sind als Abschnitte eines geschlossenen Polygonzuges dargestellt. Die Feldgrenze kann in dem Datenverarbeitungssystem oder Terminal als Polygonzug gespeichert sein, oder durch einen Algorithmus als Polygonzug approximiert werden.

In einem ersten Schritt der Feldplanung hat der Benutzer die Möglichkeit mittels eines Aufteilungsmodules die landwirtschaftliche Fläche manuell in mehrere Teilflächen aufzuteilen. Hierfür ist vorgesehen, dass er mittels einer Eingabeeinrichtung beispielsweise an einem Touchscreen des Terminals zwei Trennpunkte 13.1 und 13.2 der Feldgrenze markiert, die durch eine Trennlinie 11 verbunden werden sollen. Die Trennpunkte 13.1 und 13.2 können frei wählbar sein oder es können auch Vorschläge für die Wahl von Trennpunkten durch das Datenverarbeitungssystem oder Terminal oder den Jobrechner gemacht werden, die der Nutzer dann auswählen kann. Diese können sich jeweils bevorzugt zwischen zwei Abschnitten des Polygonzuges befinden. Alternativ oder zusätzlich kann das Datenverarbeitungssystem oder Terminal oder der Jobrechner auch bereits die Einteilung von Teilflächen vorschlagen. So kann vorgesehen sein, dass die Teilfläche 15 und 16 unabhängig markiert werden. Durch eine Berührung eines beliebigen Bereichs innerhalb einer der Flächen kann dann der Benutzer beispielsweise dem System signalisieren, dass dieser Flächenteil als Teilfläche markiert werden soll. Sind beispielsweise drei mögliche Teilflächen von dem Datenverarbeitungssystem oder Terminal vorgeschlagen worden und wählt der Benutzer nur eine dieser Flächen durch Berührung oder sonstige Eingabe aus, so wird nur diese Fläche als Teilfläche in der vom Datenverarbeitungssystem vorgeschlagenen Weise abgeteilt und der Rest der landwirtschaftlichen Fläche wird als zweite Teilfläche behandelt. Die von dem Datenverarbeitungssystem, Terminal oder Jobrechner vorgeschlagenen Trennlinien können nach Festlegung der Teilflächen vorzugsweise durch den Benutzer in Position und Orientierung angepasst werden.

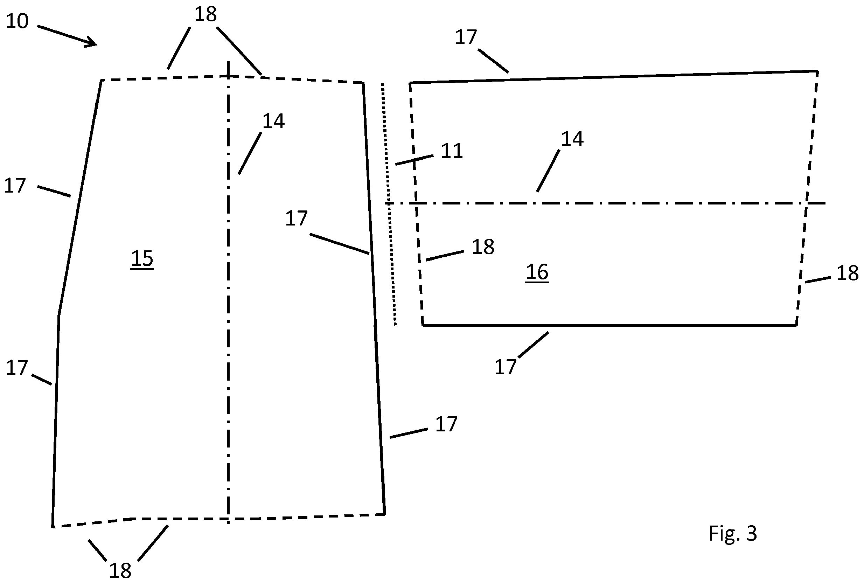

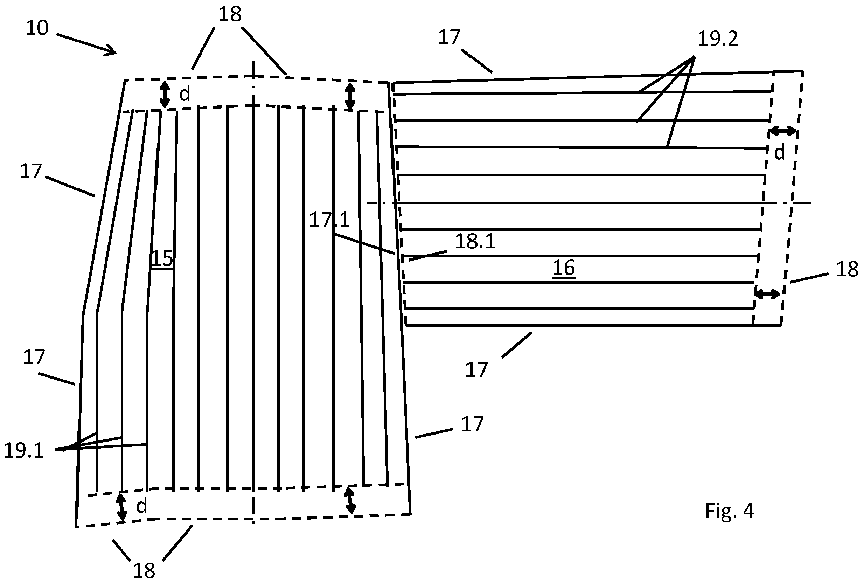

Nach der manuellen Einteilung der Flächen in Teilflächen erfolgt die weitere Planung der Fahrspuren bzw. des Fahrspursystems durch das Terminal, das Datenverarbeitungssystem oder Jobrechner in automatischer Weise mittels eines Fahrspurplanungsmodules, wie in Fig. 3 und Fig. 4 dargestellt. Das Fahrspurplanungsmodul ist insbesondere in weitere Module aufgeteilt.

Zunächst wird mittels eines Richtungsmodules die Position der Bezugsachsen 14 festgelegt. Die Bezugsachsen geben hierbei die bevorzugte Bearbeitungsrichtung bei der Bearbeitung der jeweiligen Teilfläche 15, 16 an und werden für jede Teilfläche 15, 16 individuell festgelegt, vorzugsweise entsprechend der Geometrie der jeweiligen Teilfläche. Beispielsweise kann die Bezugsachse jeweils entlang des längsten Abschnittes des Polygonzuges angelegt werden. Die Abschnitte des Polygonzuges werden dann anschließend durch das Terminal oder Datenverarbeitungssystem mittels eines Klassifizierungsmodules bevorzugt als Vorgewendeabschnitte 18 klassifiziert, wenn sie zumindest überwiegend senkrecht zu der Bezugsachse verlaufen und als Seitenabschnitte 17, wenn sie zumindest überwiegend parallel zu der jeweiligen Bezugsachse verlaufen. Weitere Kriterien können sein, dass die Bereiche welche durch jeweils aneinander angrenzende Seitenabschnitte bzw. Vorgewendeabschnitte auf einander gegenüberliegenden Seiten der landwirtschaftlichen Fläche gebildet werden, möglichst gleich lang sind. Die Trennlinie 11 wird hierbei jeweils als Abschnitt des Polygonzuges beiden Teilflächen 15 und 16 zugeordnet, damit diese wiederum durch einen geschlossenen Polygonzug begrenzt werden.

In einer alternativen Vorgehensweise kann auch zunächst mittels des Klassifizierungsmodules eine Klassifizierung der Abschnitte des Polygonzuges als Vorgewendeabschnitt 18 oder Seitenabschnitt 17 erfolgen. Es werden zunächst für jede Teilfläche die Abschnitte des Polygonzuges als Seitenabschnitte 17 oder Vorgewendeabschnitte 18 durch das Terminal oder das Datenverarbeitungssystem oder den Jobrechner festgelegt. Die Vorgewendeabschnitte werden hierbei an den Stellen platziert an denen auf Grund der Geometrie der jeweiligen Teilfläche ein Wenden der landwirtschaftlichen Maschine bei der Bearbeitung der landwirtschaftlichen Fläche vorteilhaft ist. Die Einteilung erfolgt bevorzugt derart, dass die Anzahl der Fahrspuren maximiert und/oder die Anzahl der Wendevorgänge minimiert wird. In einem nächsten Schritt werden nun für jede Teilfläche 15, 16 Bezugsachsen durch das Datenverarbeitungssystem oder Terminal mittels des Richtungsmodules geplant, welche die bevorzugte Bearbeitungsrichtung innerhalb der jeweiligen Teilfläche kennzeichnen. Diese Bezugsachsen 14 verbinden vorzugsweise Vorgewendeabschnitte 18 auf einander gegenüberliegenden Seiten der jeweiligen Teilfläche15, 16, so dass bei einer Bearbeitung längs der jeweiligen Bezugsachse 14 im Bereich der Vorgewendeabschnitte 18 gewendet werden kann.

Nach der Festlegung der Bezugsachsen und der Klassifizierung der Begrenzungsabschnitte in Seitenabschnitte und Vorgewendeabschnitte werden in einem nächsten Schritt die Teilflächen 15, 16 mittels eines Separierungsmodules in Unterteilungsflächen durch das Datenverarbeitungssystem oder Terminal oder Jobrechner aufgeteilt, sofern die hierfür hinterlegten Kriterien erfüllt sind. Beispielsweise kann es vorgesehen sein, dass bei einer entsprechenden Orientierung und/oder Länge und/oder Längenverhältnis von benachbarten Vorgewende und Seitenabschnitten eine Aufteilung der Fläche oder jeweiligen Teilfläche vorgenommen wird, insbesondere, wenn der innen liegende Winkelgrößer als 180 ° ist, da hierdurch Ausbuchtungen der landwirtschaftlichen Fläche charakterisiert sind, welche eine Aufteilung der landwirtschaftlichen Fläche in mehrere Teilflächen vorteilhaft machen. Die Größe dieser Ausbuchtungen kann durch die Länge des jeweils betrachteten Vorgewende und/oder Seitenabschnittes charakterisiert sein und ebenfalls berücksichtigt werden. Da obige Kriterien für die in Fig. 2 - 4 dargestellte landwirtschaftliche Fläche 10 nicht erfüllt sind, erfolgt für diese Fläche bzw. deren Teilflächen 15, 16 keine Unterteilung in Unterteilungsflächen.

In einem nächsten Schritt werden nun Vorgewendebereiche der Breite d mittels eines Vorgewendemodules durch das Datenverarbeitungssystem oder Terminal ermittelt, wie in Fig. 4 dargestellt. Diese Bereiche werden von der Bearbeitung entlang der zu planenden Fahrspuren 19, 20 ausgenommen und für den Wendevorgang am Ende bzw. am Anfang der jeweiligen Fahrspur 19, 20 verwendet. Die Breite d dieser Bereich hängt vorzugsweise von dem Wenderadius des jeweiligen Zugfahrzeuges und/oder des landwirtschaftlichen Bearbeitungsgerätes ab und/oder von dessen Arbeitsbreite und/oder dem Typ des jeweils verwendeten landwirtschaftlichen Gerätes usw.

Die Vorgewendebereiche werden jeweils im Bereich der Vorgewendeabschnitte 18 angelegt. Es wird jedoch nicht zwingend durch das Datenverarbeitungssystem oder Terminal oder den Jobrechner jeweils ein Vorgewendebereich an einem Vorgewendeabschnitt angelegt. Insbesondere im Übergangsbereich zweier Teilflächen kann vorgesehen sein, dass nur dann ein Vorgewendebereich angelegt wird, wenn die aneinander angrenzenden Abschnitte der Teilflächen 17.1 und 18.1 als Vorgewendeabschnitt klassifiziert sind. Auf diese Weise kann ein Übergangsbereich zweier Teilflächen besonders effizient bearbeitet werden, wenn ein Vorgewendeabschnitt 18.1 einer ersten Teilfläche an einen Seitenabschnitt 17.1 einer zweiten Teilfläche angrenzt. Die zweite Teilfläche 16 muss hierbei als erstes bearbeitet werden und der Wendevorgang an einem Ende der Fahrspuren wird dann jeweils im Bereich der ersten Teilfläche 15 erfolgen. Bei der Bearbeitung der ersten Teilfläche 15 erfolgt dann die Bearbeitung des Bereiches in dem beider Bearbeitung der zweiten Teilfläche 16 gewendet wurde automatisch. Es kann somit ein Vorgewendebereich eingespart werden, was zu einer effizienteren Bearbeitung der Fläche 10 und somit weniger Zeit- und Kostenaufwand führt.

Die oben genannte Bedingung für das Anlegen eines Vorgewendebereiches bei aneinander angrenzenden Abschnitten im Übergangsbereich zweier Teilflächen kann zudem mit weiteren Bedingungen verknüpft sein, beispielsweise dass nur dann ein Vorgewendebereich angelegt wird, wenn zusätzlich die Bezugsachsen einen gewissen Winkel einschließen, so dass die Fahrspuren in den beiden Bereichen nicht in einem Zug bearbeitet werden können, da beispielsweise ein minimaler Bearbeitungsradius der landwirtschaftlichen Maschine unterschritten wird.

Im letzten Schritt wird durch das Datenverarbeitungssystem oder Terminal mittels eines Fahrspurermittlungsmodules ein Fahrspursystem für die Fläche oder Teilfläche oder Unterteilungsfläche angelegt. Hierbei werden Fahrspuren 19.1, 19.2 für jede Teilfläche und/oder Unterteilungsfläche berechnet, welche vorzugsweise zumindest annähernd parallel zu der jeweiligen Bezugsachse 14 verlaufen. Der Verlauf der Fahrspuren wird hierbei den entsprechenden Gegebenheiten so angepasst, dass sich die Fahrspuren im Außenbereich oder in der Nähe von Hindernissen an die jeweiligen Abschnitte insbesondere Seitenabschnitte des die Fläche oder Teilfläche oder Unterteilungsfläche begrenzenden Polygonzuges anschmiegen und so eine möglichst effiziente Bearbeitung der landwirtschaftlichen Fläche möglich ist. Hierbei sollen möglichst wenig Überlappungen und keine Fehlstellen vorliegen und der Zeit- und Kraftstoffbedarf durch die Minimierung der Anzahl der Fahrspuren und/oder Wendevorgänge minimiert werden. Der Fahrspurabstand hängt hierbei vorzugsweise von der minimalen und/oder maximalen Arbeitsbreite und/oder dem minimalen Wenderadius und/oder minimalen Bearbeitungsradius der landwirtschaftlichen Maschine und/oder des Zugfahrzeuges ab.

Die Fahrspuren enden hierbei jeweils im Abstand d von dem jeweiligen Vorgewendeabschnitt 18, sofern in diesem Bereich ein Vorgewendebereich angelegt worden ist. Im Bereich des Vorgewendeabschnittes 18.1 der Teilfläche 16 wurde bspw. kein Vorgewendebereich angelegt. Bei einer vorrangigen Bearbeitung der Teilfläche 16 kann auf der Teilfläche 15 gewendet werden. Anschließend wird dieser Bereich in dem auf der Teilfläche 15 gewendet wurde bei der Bearbeitung der Teilfläche 15 entlang der Fahrspuren 19.1 mitbearbeitet.

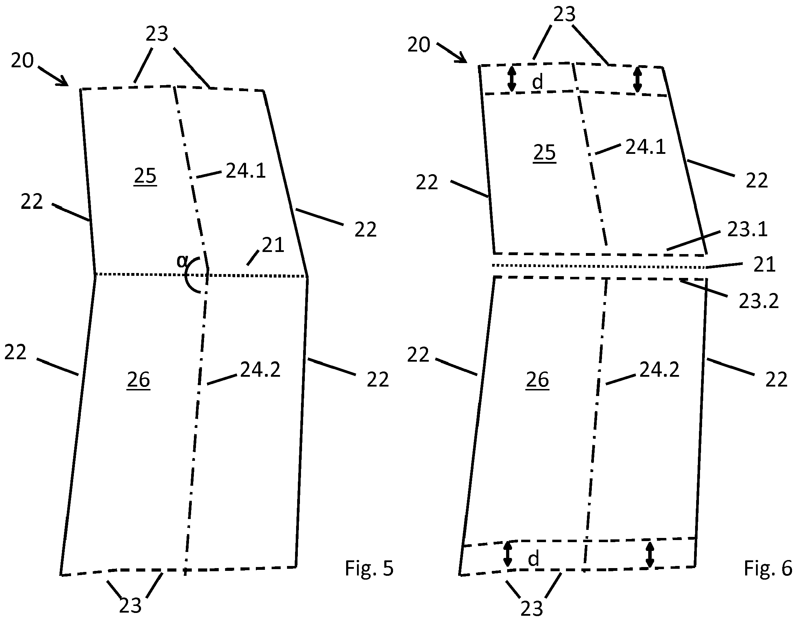

Für eine zweite landwirtschaftliche Fläche 20 ist eine Anwendung des erfindungsgemäßen Verfahrens in Fig. 5 gezeigt. Die landwirtschaftliche Fläche 20 ist in diesem Fall durch eine Benutzereingabe in das Aufteilungsmodul derart unterteilt worden, dass sich ein Trennlinie 21 ergibt, welcher die Fläche 20 in Teilflächen 25 und 26 aufteilt. Diese Aufteilung kann auch beispielsweise durch das Aufteilungsmodul automatisiert vorgeschlagen werden und dann durch den Benutzer angenommen oder verworfen werden.

Jede der Teilflächen 25, 26 weist eine Bezugsachse 24.1, 24.2 auf, welche durch das Richtungsmodul in automatisierter Weise bestimmt werden. Die Bezugsachse 24.1 gibt hierbei im oberen Bereich der landwirtschaftlichen Fläche 20 eine bevorzugte Bearbeitungsrichtung an und die Bezugsachse 24.2 im unteren Bereich. Die Bezugsachsen werden beispielsweise anhand der Ausrichtung bzw. Geometrie des jeweils betrachteten Bereichs der landwirtschaftlichen Fläche ermittelt. Bevorzugt kann für die jeweilige Fläche oder Teilfläche oder Unterteilungsfläche jeweils die Orientierung und Länge der die Fläche oder Teilfläche oder Unterteilungsfläche begrenzenden Abschnitte zur Ermittlung der Bezugsachse betrachtet werden, so dass die Länge der Fahrspuren maximiert und/oder die Anzahl der Wendevorgänge minimiert wird.

Die landwirtschaftliche Fläche 20 wird zudem von Seitenabschnitten 22 und Vorgewendeabschnitten 23 begrenzt, welche durch ein Klassifizierungsmodul bestimmt werden. Hierbei wird, wie in Fig. 6 dargestellt, der Abschnitt bzw. die Trennlinie 21 als Abschnitt 23.1 und als Abschnitt 23.2 jeweils der Teilfläche 25 und 26 zugeordnet, so dass sich für jede der Teilflächen ein geschlossener Polygonzug als Begrenzung ergibt. Die Abschnitte 23.1 und 23.2 werden anhand ihrer Länge und/oder Orientierung im vorliegenden Fall jeweils als Vorgewendeabschnitt klassifiziert. Die Klassifizierung der Abschnitte in Seitenabschnitte und Vorgewendeabschnitte erfolgt hierbei beispielsweise anhand des Winkels, welchen die jeweilige Bezugsachse und der betrachtete Abschnitt einschließen oder anhand der Geometrie der jeweiligen Teilfläche 25, 26.

Das Vorgewendemodul ermittelt nun die Position der Vorgewendebereiche in der Nähe der Vorgewendeabschnitte, wo auch tatsächlich eine oder mehrere Fahrspuren beginnen oder enden und somit ein Wendevorgang erfolgen soll. Hierbei wird jeweils im unteren Bereich und oberen Bereich der landwirtschaftlichen Fläche 20 ein Bereich der Breite d von Fahrspuren freigehalten in dem der Wendevorgang erfolgen soll. Im Bereich der Trennlinie 21 der Teilflächen 25, 26 soll dagegen kein Wendevorgang erfolgen. Entsprechend wird dort kein Vorgewendebereich angelegt. Der Grund ist, dass die Bezugsachsen 24.1 und 24.2 einen Winkel **α** einschließen, der größer ist als ein festgelegter erster Grenzwinkel. Der erste Grenzwinkel kann hierbei vorzugsweise durch Parameter der landwirtschaftlichen Arbeitsmaschine und/oder der Zugmaschine bedingt sein, beispielsweise durch einen minimalen Bearbeitungsradius. **Der Winkel α ist also so groß, dass die Fahrspuren** im Übergangsbereich der Teilflächen 25, 26 in einem Zug, das heißt ohne Aussetzen und/oder Wenden der landwirtschaftlichen Maschine bearbeitet werden können.

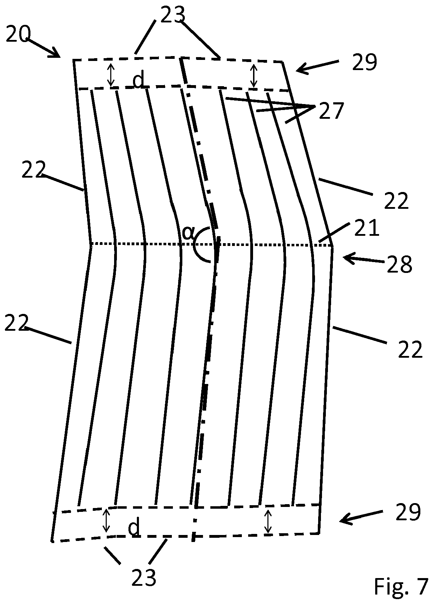

Die Fahrspuren werden nun mittels des Fahrspurermittlungsmoduls automatisch wie in Fig. 7 dargestellt ermittelt, wobei bevorzugt im Bereich 28 der Trennlinie 21 zunächst die Position der Kreisbögen zur Verbindung der Fahrspuren 27 und 29 ermittelt werden und anschließend die Fahrspuren 27 und 29 derart erzeugt werden, dass die jeweilige Teilfläche 25, 26 durch das Bearbeiten der landwirtschaftlichen Fläche ohne Fehlstellen bearbeitet werden kann. Zudem werden die Fahrspuren so konstruiert, dass die Anzahl der Überfahrten minimiert wird und die Fahrspuren 27, 29 jeweils tangential die Kreisbögen im Bereich 28 treffen, so dass verbundene Fahrspuren 27, 29 entstehen, die jeweils einen **Winkel α einsc**hließen, der größer als ein festgelegter erster Grenzwinkel ist und somit die Fahrspuren in einem Zug bearbeitet werden können. Die Fahrspuren sind derart angelegt, dass sie annähernd parallel zu den Bezugsachse 24.1 und 24.2 verlaufen und sich im Randbereich jeweils an die Seitenabschnitte 22 anschmiegen.

Eine automatische Aufteilung der landwirtschaftlichen Fläche mittels eines Separierungsmoduls ist bei einer landwirtschaftlichen Fläche 20 nicht notwendig. Wäre diese Fläche nicht in Teilflächen 25, 26 unterteilt worden und der Winkel **α** kleiner als der entsprechende erste Grenzwinkel, so ist eine automatische Aufteilung mittels eines Separierungsmoduls vorgesehen, so dass im Bereich der Unterteilungslinie 21 dann ein Vorgewende angelegt wird, da die Fläche in diesem Fall nicht in einem Zug und ohne Aussetzen bearbeitet werden kann.

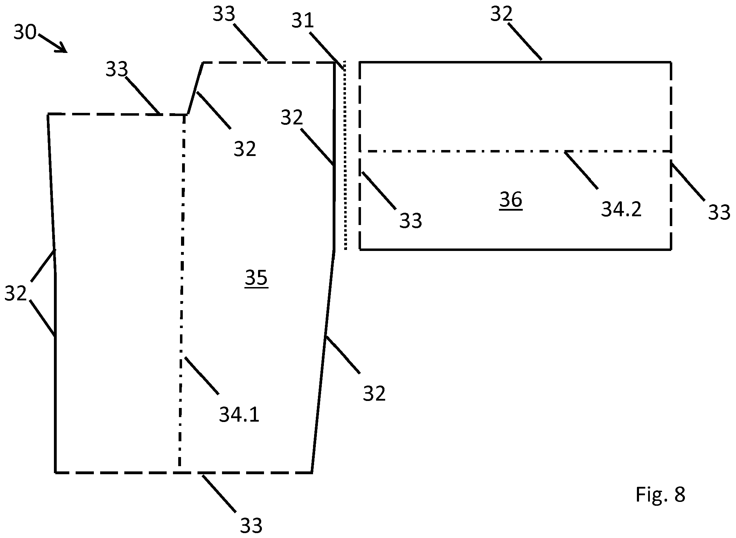

Eine dritte landwirtschaftliche Fläche 30 ist in Fig. 8 gezeigt. Die landwirtschaftliche Fläche ist durch den Benutzer in zwei Teilflächen 35, 36 durch Konstruktion der Trennlinie 31 unterteilt worden. Die Unterteilung kann hierbei durch das Aufteilungsmodul vorgeschlagen und durch den Benutzer angenommen oder allein durch manuelle Wahl der Position der Trennlinie durch den Benutzer allein festgelegt worden sein. Die Trennlinie 31 wird jeweils beiden Teilflächen 35, 36 zugeordnet, so dass beide Teilflächen durch einen geschlossenen Polygonzug begrenzt werden.

Mittels des Richtungsmoduls wird automatisiert für jede Teilfläche eine Bezugsachse 34.1 und 34.2 als bevorzugte Bearbeitungsrichtung für die jeweilige Teilfläche ermittelt und mittels des Klassifizierungsmoduls die Abschnitte des jeweiligen die Teilfläche begrenzenden Polygonzuges in Vorgewendeabschnitte 33 und Seitenabschnitte 32 klassifiziert.

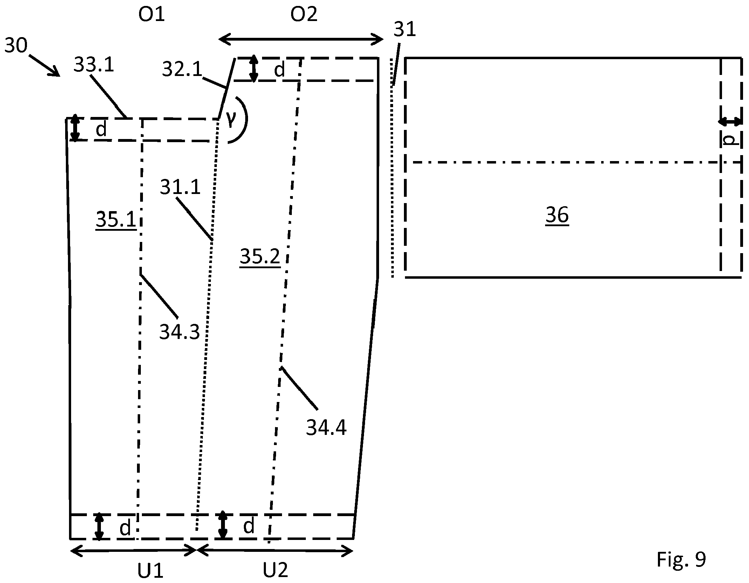

Nun wird mittels des Separierungsmoduls die Teilfläche 35 in zwei Unterteilungsflächen 35.1 und 35.2 unterteilt, wie in Fig. 9 dargestellt. In diesem Fall ist der innenliegende Winkel zwischen dem Vorgewendeabschnitt 33.1 und dem Seitenabschnitt 32.1 größer als ein festegelegter zweiter Grenzwinkel, beispielsweise 185°. Dies zeigt eine Ausbuchtung in der Teilfläche 35 an, so dass eine Aufteilung in Unterteilungsflächen 35.1 und 35.2 mittels einer Unterteilungslinie 31.1 zweckmäßig ist. Hierbei können weitere Kriterien herangezogen werden, wie beispielsweise die Längen der Abschnitte 33.1 und 32.1. Es wird nun für jede Unterteilungsfläche 35.1, 35.2 eine Bezugsachse 34.3, 34.4 konstruiert, welche eine bevorzugte Bearbeitungsrichtung innerhalb der jeweiligen Unterteilungsfläche angeben.

Die Unterteilungslinie 31.1 wird entsprechend der Länge der oberen Vorgewendebereiche O1 und O2 derart gewählt, dass die unteren Vorgewendebereiche derselben Unterteilungsfläche möglichst dieselbe Länge besitzen. Mithin verläuft also die Unterteilungslinie nicht einfach senkrecht, sondern in einem Winkel zu Senkrechten, so dass U1 ungefähr gleich O1 und U2 ungefähr gleich 02 ist. Alternativ oder zusätzlich können auch Seitenabschnitte, die an die Trennlinie einer Fläche oder Teilfläche angrenzen betrachtet werden. In diesem Fall wird die Orientierung der Trennlinie derart gewählt werden, dass der Winkel zwischen Trennlinie 31.1 und Seitenabschnitt 32.1 einen Wert von **γ besitzt** und damit größer als ein erster Grenzwinkel ist, der durch den minimalen Bearbeitungsradius der landwirtschaftlichen Maschine oder einen minimalen Wenderadius der landwirtschaftlichen Maschine oder Zugmaschine oder sonstige Parameter gegeben ist. Auf diese Weise wird sichergestellt, dass eine Fahrspur, welche den Abschnitten 31.1 und 32.1 benachbart ist, durch die landwirtschaftliche Maschine ohne Aussetzen oder Wendevorgang bearbeitet werden kann. Bei einer senkrechten Trennlinie 31.1 wäre der Winkel **γ** entsprechend kleiner und würde unter Umständen den ersten Grenzwinkel unterschreiten.

Die einzelnen Module zur Planung des Fahrspursystems können hierbei in unterschiedlicher Reihenfolge zur Anwendung kommen. So können beispielsweise die Bezugsachsen 34.1, 34.2 direkt nach der manuellen Aufteilung geplant und anschließend die Bezugsachsen 34.3, 34.4 nach der automatischen Aufteilung in Unterteilungsflächen ermittelt werden. Alternativ kann nach der Aufteilung in Unterteilungsflächen eine weitere Ermittlung von Bezugsachsen für die Unterteilungsflächen unterbleiben und nur jeweils eine Bezugsachse pro Teilfläche in diesem Fall beispielsweise eine Bezugsachse 34.2 für die Unterteilungsflächen 35.1 und 35.2 festgelegt sein. Alternativ kann eine Bestimmung der Bezugsachsen erst nach der Ermittlung der Unterteilungsflächen erfolgen. In diesem Fall müsste die Klassifizierung der Abschnitte der Polygonzüge als Seitenabschnitte und Vorgewendeabschnitte ohne vorherige Bestimmung der Bezugsachsen erfolgen. Dies ist jedoch ohne weiteres denkbar. So könnte anhand der jeweiligen Feldgeometrie oder Geometrie der Teilflächen oder Unterteilungsflächen eine optimale Klassifizierung der Abschnitte in Vorgewende- und Seitenabschnitte erfolgen.

Es werden zudem Vorgewendebereiche der Breite d angelegt, welche von dem zu ermittelnden Fahrspursystem freigehalten werden und als Wendebereiche zum Wenden zwischen der Bearbeitung von zwei Fahrspuren dienen. Im Bereich der Trennlinie 31 wird analog zu dem Vorgehen bei der landwirtschaftlichen Fläche 10 kein Vorgewendebereich angelegt, da bei der Bearbeitung der Teilfläche 36 anschließend bei der Bearbeitung der Teilfläche 35 bzw. der Unterteilungsflächen 35.1 und 35.2 die Bearbeitung des Bereichs erfolgt, der zuvor für den Wendevorgang im Bereich der Trennlinie 31 verwendet wurde.

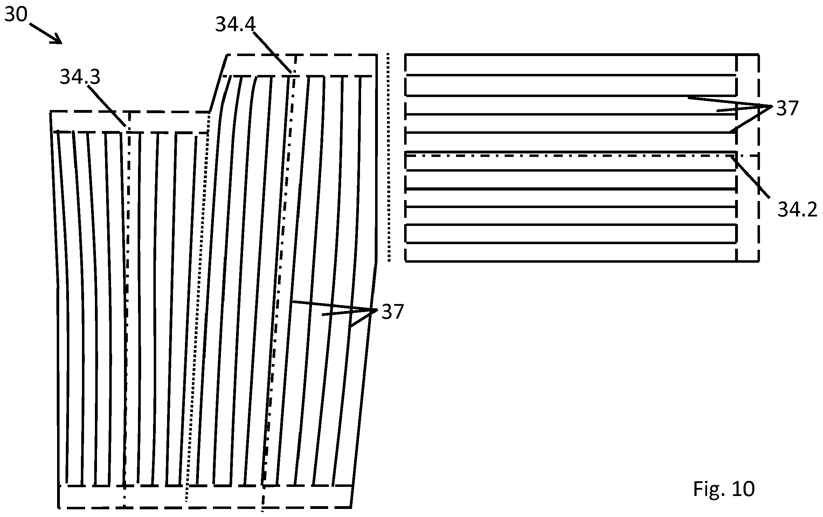

Mittels des Fahrspurermittlungsmoduls werden im letzten Schritt automatisch für alle Teilflächen und Unterteilungsflächen Fahrspuren 37 angelegt, wie in Fig. 10 dargestellt, so dass die die Fläche 30 mittels der landwirtschaftlichen Maschine ohne Fehlstellen entlang der Fahrspuren 37 bearbeitet werden kann. Die Fahrspuren verlaufen hierbei in den einzelnen Teilflächen bzw. Unterteilungsflächen zumindest annähernd parallel zu den Bezugsachsen 34.2, 34.3, 34.4 und in den Randbereichen annähernd parallel zu den Seitenabschnitten, so dass eine möglichst effiziente Bearbeitung der landwirtschaftlichen Fläche 30 erfolgt. Der Abstand der Fahrspuren ist hierbei im Allgemeinen bedingt durch die Arbeitsbreite der landwirtschaftlichen Maschine, wobei die Anzahl der Überfahrten und damit die Anzahl der Wendevorgänge möglichst minimiert wird.

Die Vorgewendebereiche bleiben frei von Fahrspuren und werden zum Wenden im Anschluss an die Bearbeitung der jeweiligen Fahrspur 37 verwendet. Die Breite d der Vorgewendebereiche richtet sich hierbei in erster Linie nach dem minimalen Wenderadius der landwirtschaftlichen Maschine und/oder des Zugfahrzeuges.

Die Anwendung der einzelnen Module kann in vielfältiger Reihenfolge erfolgen. Beispielsweise kann das Richtungsmodul vor oder nach dem Klassifizierungsmodul angewendet werden, je nachdem ob für die Klassifizierung der einzelnen Abschnitte des Polygonzuges die Orientierung der Bezugsachse oder die Geometrie der Fläche oder Teilfläche für die Klassifizierung betrachtet wird. Auch ist es denkbar erst nach der Anwendung des Separierungsmodules das Richtungsmodul anzuwenden, also die Bezugsachsen erst festzulegen wenn bereits die Aufteilung der Fläche oder Teilfläche in Unterteilungsflächen erfolgt ist. Das Richtungsmodul kann auch zweimal angewendet werden, einmal vor der Anwendung des Klassifizierungsmodules und einmal nach der Anwendung des Separierungsmodules. Für das Fahrspurermittlungsmodul kann also entweder für jede Teilfläche eine Bezugsachse definiert sein, oder für jede Teilfläche und Unterteilungsfläche. Ist nur für jede Teilfläche eine Bezugsachse ermittelt worden, so bedeutet dies, dass bei einer Unterteilung einer Teilfläche in zwei Unterteilungsflächen diesen dieselbe Bezugsachse zugeordnet ist. Da die Fahrspuren zweier Unterteilungsflächen innerhalb einer Teilfläche im Allgemeinen in dieselbe Richtung verlaufen (siehe Fig. 10) ist diese Vorgehensweise kein großer Nachteil.

Auch kann vorgesehen sein, bestimmte Module nicht anzuwenden, so ist es bei manchen landwirtschaftlichen Flächen nicht vorteilhaft oder notwendig diese manuell in mehrere Teilflächen aufzuteilen. Ebenfalls ist denkbar, dass die Anwendung des Separierungsmodules nicht notwendig ist, wie beispielsweise bei der Fläche 10 oder 20.

Es kann vorgesehen sein, die automatisierten Module mit manuellen Schritten, beispielsweise zur Bestätigung der automatisch ermittelten Positionen für Vorgewende- und Seitenabschnitte, Bezugsachsen, Fahrspuren Unterteilungsflächen usw. zu kombinieren. Die manuelle Aufteilung der landwirtschaftlichen Fläche in Teilflächen ist jedoch auf jeden Fall möglich, alle anderen Schritte werden im Allgemeinen automatisch durchgeführt.

## Patentansprüche

1. Landwirtschaftliche Maschinensystem (1, 2) zur Bearbeitung einer landwirtschaftlichen Fläche (10, 20, 30) mit einem Positionserfassungssystem (7) und einem landwirtschaftlichen Datenverarbeitungssystem (3, 8), wobei die Geometrie der zu bearbeitenden landwirtschaftlichen Fläche in dem Datenverarbeitungssystem hinterlegt ist, wobei das Datenverarbeitungssystem zur Ermittlung von Fahrspuren (19.1, 19.2, 27, 29, 37) auf einer landwirtschaftlichen Fläche ausgebildet ist,
**dadurch gekennzeichnet,**
**dass** das Datenverarbeitungssystem über folgende Module zur Bestimmung eines Fahrspursystems zur Bearbeitung der landwirtschaftlichen Fläche verfügt:
a) ein Aufteilungsmodul zur manuellen Teilung der landwirtschaftlichen Fläche (10, 20, 30) in zumindest zwei Teilflächen (15, 16, 25, 26, 35, 36) durch einen Benutzer, falls eine separate Bearbeitung der Teilflächen sinnvoll erscheint, mittels einer Auswahl von Teilflächen und/oder einer Definition von Trennlinien (11, 21, 31) zur Aufteilung der landwirtschaftlichen Fläche (10, 20, 30) in Teilflächen und
b) ein Fahrspurplanungsmodul zur Ermittlung von Fahrspuren (19.1, 19.2, 27, 29, 37) für die landwirtschaftliche Fläche und/oder jede Teilfläche.

2. Landwirtschaftliches Maschinensystem nach Anspruch 1, wobei das Fahrspurplanungsmodul umfasst:
c) ein Richtungsmodul zur Ermittlung einer Bezugsachse (14, 24.1, 24.2, 34.1, 34.2, 34.3, 34.4) als bevorzugte Bearbeitungsrichtung der landwirtschaftlichen Fläche (10, 20, 30) oder jeweiligen Teilfläche (15, 16, 25, 26, 35, 36) in Abhängigkeit der Geometrie der landwirtschaftlichen Fläche oder Teilfläche,
d) ein Klassifizierungsmodul zur Klassifizierung von Abschnitten der Begrenzung der landwirtschaftlichen Fläche oder einer Teilfläche in Abschnitte eines Vorgewendes (18, 23, 33) oder Seitenabschnitte (17, 22, 32) in Abhängigkeit von der Ausrichtung der Bezugsachse (14, 24.1, 24.2, 34.1, 34.2, 34.3, 34.4) und/oder der Geometrie der landwirtschaftlichen Fläche oder Teilfläche,
e) ein Separierungsmodul zur automatischen Aufteilung der landwirtschaftlichen Fläche (10, 20, 30) oder Teilfläche (15, 16, 25, 26, 35, 36) in Unterteilungsflächen (35.1, 35.2) anhand der klassifizierten Abschnitte (17, 18, 22, 23, 32, 33), wobei die Aufteilung der landwirtschaftlichen Fläche oder Teilfläche in Unterteilungsflächen (35.1, 35.2) anhand folgender Kriterien erfolgt:
- Orientierung und/oder Länge benachbarter Abschnitte (32.1, 33.1), insbesondere benachbarter Vorgewende- und Seitenabschnitte und/oder,
- Position von Hindernissen innerhalb der Fläche oder Teilfläche,
f) ein Vorgewendemodul zum Anlegen zumindest eines Vorgewendebereiches pro Teilfläche und/oder Unterteilungsfläche oder zweier Vorgewendebereiche pro landwirtschaftliche Fläche in Abhängigkeit der klassifizierten Abschnitte (17, 18, 22, 23, 32, 33) der Begrenzung der landwirtschaftlichen Fläche und/oder der ermittelten Bezugsachse (14, 24.1, 24.2, 34.1, 34.2, 34.3, 34.4) für die landwirtschaftliche Fläche oder Teilfläche und
g) ein Fahrspurermittlungsmodul zur Planung eines Fahrspursystems für die landwirtschaftliche Fläche und/oder zumindest eine Teilfläche und/oder Unterteilungsfläche anhand der ermittelten Bezugsachse, wobei die Fahrspuren (19.1, 19.2, 27, 29, 37) zumindest annähernd parallel zu der jeweiligen Bezugsachse (14, 24.1, 24.2, 34.1, 34.2, 34.3, 34.4) der Fläche oder Teilfläche verlaufen.

3. Landwirtschaftliches Maschinensystem nach Anspruch 1 oder 2, **dadurch gekennzeichnet, dass** das System zusätzlich umfasst:
h) ein Approximierungsmodul zur Annäherung der Begrenzung der landwirtschaftlichen Fläche (10, 20, 30) und/oder Teilfläche (15, 16, 25, 26, 35, 36) und/oder Unterteilungsfläche (35.1, 35.2) mittels eines geschlossenen Polygonzuges umfasst.

4. Landwirtschaftliches Maschinensystem nach Anspruch 2 oder 3, **dadurch gekennzeichnet, dass** das Fahrspurermittlungsmodul folgendes umfasst:
i) ein Bogenschlussmodul zur Verbindung von Fahrspuren (27, 29) aneinander angrenzender Teilflächen und/oder Unterteilungsflächen mittels eines Bogenschlusses, wobei zu verbindende Fahrspuren sich an der Grenze benachbarter Teilflächen und/oder Unterteilungsflächen zumindest annähernd berühren oder schneiden, wobei der für den Bogenschluss zu konstruierende Kreisbogen bevorzugt jeweils tangential an die zu verbindenden Fahrspuren (27, 29) anschließt, wobei bevorzugt die Position der Kreisbögen ermittelt und erst anschließend die Fahrspuren (27, 29) derart konstruiert werden, dass sie tangential an den Kreisbogen anschließen.

5. Landwirtschaftliches Maschinensystem nach zumindest einem der vorhergehenden Ansprüche, wobei die landwirtschaftliche Maschine über eine mittels zumindest eines Aktors (9) anpassbare Arbeitsbreite verfügt, **dadurch gekennzeichnet, dass** das System zusätzlich umfasst:
j) ein Arbeitsbreitenmodul, welches zur automatischen Anpassung der Arbeitsbreite an den Abstand zu einer benachbarten Fahrspur Stellsignale an den zumindest einen Aktor (9) sendet, so dass keine unbearbeiteten Flächen übrig bleiben und möglichst keine Doppelbearbeitung oder Fehlbearbeitung erfolgt.

6. Verfahren zur Planung von Fahrspuren auf einer landwirtschaftlichen Fläche oder Teilfläche zur Bearbeitung der landwirtschaftlichen Fläche mittels einer landwirtschaftlichen Maschine entlang der geplanten Fahrspuren, **gekennzeichnet durch**
die folgenden Schritte:
k) Manuelles Aufteilen der landwirtschaftlichen Fläche (10, 20, 30) in Teilflächen (15, 16, 25, 26, 35, 36) durch einen Benutzer, falls eine sukzessive Bearbeitung von Teilflächen der landwirtschaftlichen Fläche vorteilhaft erscheint
I) Ermitteln zumindest einer Bezugsachse (14, 24.1, 24.2, 34.1, 34.2, 34.3, 34.4) als bevorzugte Bearbeitungsrichtung der landwirtschaftlichen Fläche oder jeweiligen Teilfläche in Abhängigkeit der Geometrie der landwirtschaftlichen Fläche oder Teilfläche,
m) Klassifizieren von Abschnitten der Begrenzung der landwirtschaftlichen Fläche oder einer Teilfläche in Abschnitte eines Vorgewendes (18, 23, 33) oder Seitenabschnitte (17, 22, 32) in Abhängigkeit von der Ausrichtung der Bezugsachse (14, 24.1, 24.2, 34.1, 34.2, 34.3, 34.4) und/oder der Geometrie der landwirtschaftlichen Fläche oder Teilfläche,
n) Automatisches Aufteilen der landwirtschaftlichen Fläche oder Teilfläche in Unterteilungsflächen (35.1, 35.2) anhand der klassifizierten Abschnitte (17, 18, 22, 23, 32, 33), wobei die Aufteilung der landwirtschaftlichen Fläche oder Teilfläche in Unterteilungsflächen anhand folgender Kriterien erfolgt:
- Orientierung und/oder Länge benachbarter Abschnitte(32.1, 33.1), insbesondere benachbarter Vorgewende- und Seitenabschnitte und/oder
- Position von Hindernissen innerhalb der Fläche oder Teilfläche,
o) Anlegen zumindest eines Vorgewendebereiches pro Teilfläche und/oder Unterteilungsfläche oder zweier Vorgewendebereiche pro landwirtschaftlicher Fläche in Abhängigkeit der klassifizierten Abschnitte (17, 18, 22, 23, 32, 33) der Begrenzung der landwirtschaftlichen Fläche und/oder der ermittelten Bezugsachse (14, 24.1, 24.2, 34.1, 34.2, 34.3, 34.4) für die landwirtschaftliche Fläche oder Teilfläche und
p) Planen eines Fahrspursystems für die landwirtschaftliche Fläche und/oder zumindest eine Teilfläche und/oder Unterteilungsfläche anhand der ermittelten Bezugsachse, wobei die Fahrspuren (19.1, 19.2, 27, 29, 37) zumindest annähernd parallel zu der jeweiligen Bezugsachse (14, 24.1, 24.2, 34.1, 34.2, 34.3, 34.4) der Fläche oder Teilfläche verlaufen.

7. Verfahren nach Anspruch 6, **dadurch gekennzeichnet, dass** das Verfahren zusätzlich den Schritt umfasst:
q) Annähern der Begrenzung der landwirtschaftlichen Fläche (10, 20, 30) und/oder Teilfläche (15, 16, 25, 26, 35, 36) und/oder Unterteilungsfläche (35.1, 35.2) mittels eines geschlossenen Polygonzuges.

8. Verfahren nach Anspruch 6 oder 7, **dadurch gekennzeichnet, dass** das Verfahren zusätzlich den Schritt umfasst:
r) Verbinden von Fahrspuren (27, 29) aneinander angrenzender Teilflächen und/oder Unterteilungsflächen mittels eines Bogenschlusses, wobei zu verbindende Fahrspuren sich an der Grenze benachbarter Teilflächen und/oder Unterteilungsflächen zumindest annähernd berühren oder schneiden, wobei der für den Bogenschluss zu konstruierende Kreisbogen bevorzugt jeweils tangential an die zu verbindenden Fahrspuren (27, 29) anschließt, wobei bevorzugt die Position der Kreisbögen ermittelt und erst anschließend die Fahrspuren (27, 29) derart konstruiert werden, dass sie tangential an den Kreisbogen anschließen.
